# EUROPEAN PATENT APPLICATION

(11) **EP 2 383 818 A1**
(43) Date of publication of application: **02.11.2011**
(21) Application number: 10731201.9
(22) Date of filing: 08.01.2010
(51) Int. Cl.: H01M 2/08, H01G 9/155, H01M 2/02, H01M 2/06

(54) **ELECTROCHEMICAL DEVICE AND PROCESS OF MANUFACTURING SAME**

(30) Priority: 13.01.2009 JP 2009004913
(71) Applicant: SHOWA DENKO K.K., Minato-ku, Tokyo 105-8518 (JP); Showa Denko Packaging Co., Isehara-shi, Kanagawa 259-1146 (JP)
(72) Inventor: HASHIMOTO Daisuke, Oyama-shi Tochigi 323-8678 (JP); HATA Hiroshi, Isehara-shi Kanagawa 259-1146 (JP)
(74) Representative: Viering, Jentschura & Partner
(86) International application number: PCT/JP2010/050129
(87) International publication number: WO 2010/082532

(57) **Abstract**

An electrochemical device capable of enhancing sealing performance of a lead terminal leading portion in an exterior film for accommodating an electrochemical element is provided. In an electrochemical device in which an electrochemical element 10 is covered by a laminated outer packaging film 4 having at least an innermost layer 41 made of heat adhesive synthetic resin, a sealing portion 4d of the outer packaging film 4 is heat sealed. A laminated-type lead terminal coating film 7 is arranged at a lead terminal 5, 6 connected to the electrochemical element 10 corresponding to the sealing portion 4d of the outer packaging film 4, and the melding point of the outermost layer 73 of the lead terminal coating film 7 is set to be lower than the melding point of the innermost layer 41 of the outer packaging film 4.

## Description

### TECHNICAL FIELD

The present invention relates to an electrochemical device capable of being applied to, e.g., a lithium-ion secondary battery or an electric double-layer capacitor used as a power source for, e.g., electric vehicles and mobile phones, and also relates to a method for manufacturing the electrochemical device.

### TECHNICAL BACKGROUND

A packaging laminated material widely used as a packaging material in the fields of, e.g., medical supplies and foods is also conventionally used as an outer packaging film for an electrochemical device such as a battery encapsulating electrodes and electrolytes, and greatly contributes to the weight and thickness reduction thereof.

Conventionally, a structure is disclosed, in which power generating elements including electrodes and electrolytes are enclosed by a package made of an outer packaging film and the peripheral edge portions of the outer packaging film are fusion-welded by heat sealing with the lead terminal protruded outside (see, for example, Patent Document 1).

Such an outer packaging film made of a packaging laminated material has a multilayer structure including an outermost layer made of, e.g., polyethylene terephthalate (PET) or nylon, and an innermost layer which comes into contact with electrolyte, etc., and is made of a heat adhesive material (for example, high density polyethylene, low density polyethylene, linear low density polyethylene, polyethylene series ionomer, polyolefin resin such as polypropylene).

The outer packaging film is provided with a metallic foil, such as an aluminum foil or a SUS foil, as an intermediate layer to prevent intrusion of moisture from the outside and evaporation of the electrolyte from the inside with respect to the electrochemical device. The outermost layer is provided to give mechanical strength to protect the metallic foil constituting the intermediate layer to thereby serve protection against external forces caused by, e.g., stabbing.

Such an electrochemical device can be produced as follows. A packaging laminated material is cut into, for example, a square shape to obtain an outer packaging film. In a state in which elements such as electrodes and electrolytes are packaged with the outer packaging film, the sealing portion, such as a peripheral edge portion, of the outer packaging film is thermo-compression bonded. This results in sealing of electrochemical elements such as electrodes and electrolytes in the outer packaging film.

In the pair of lead terminals of the electrochemical device, each outer end portion is exposed to the outside via the sealing portion of the outer packaging film and the portion of the lead terminal corresponding to the sealing portion is adhered to the heat welding synthetic resin of the innermost layer of the outer packaging film. At the time of the sealing, however, in some case, the lead terminal sometimes break through the innermost layer of the outer packaging film to be brought into contact with the metallic foil of the intermediate layer, causing a short circuit.

To prevent such a problem, a technology that a lead terminal is covered with synthetic resin corresponding to a sealing portion of an outer packaging film has been traditionally proposed (see, e.g., Patent Document 2). Specifically, in the technology, a portion of the lead terminal corresponding to a sealing portion of a positive side lead terminal or a negative side lead terminal is previously covered with a heat sealing synthetic resin film.

Even in cases where a technology of providing a covering film on a lead terminal is applied, however, sufficient sealing cannot be obtained due to insufficient adhesion between the synthetic resin which is a structural component of the covering film and the metal which is a structural component of the lead terminal, which causes an obstacle in extending a battery cycle life.

In order to solve this problem, a technology has been already disclosed, in which an adhesive synthetic resin layer having good adhesion to metals as an innermost layer, an insulating synthetic resin layer, an olefin resin layer as an outermost layer are laminated on a lead terminal in this order (see, e.g., Patent Document 3).

### PRIOR ART DOCUMENTS

### PATENT DOCUMENTS

Patent Document 1: Japanese Examined Laid-open Patent Publication No. S59-38708 (JP-B-59-38708)
Patent Document 2: Japanese Unexamined Laid-open Patent Publication No. H10-302756 (JP-A-10-302756)
Patent Document 3: Japanese Unexamined Laid-open Patent Publication No. 2001-57184 (JP-A-2001-57184)

### SUMMARY OF THE INVENTION

### PROBLEMS TO BE SOLVED BY THE INVENTION

Even in the electrochemical device having the aforementioned structure, however, there was a problem that sufficient sealing could not be obtained between the synthetic resin of the innermost layer constituting the outer packaging film and the olefin resin layer of the outermost layer provided on the lead terminal. This problem is considered to be caused by unevenness in temperature of the sealing portion at the time of executing heat sealing.

Preferred embodiments of the present invention are made in view of the abovementioned and/or other problems in the related arts. The preferred embodiments of the present invention significantly improve the existing methods and/or devices.

The present invention was made in view of the aforementioned background, and aims to provide an electrochemical device and a manufacturing method of the electrochemical device capable of enhancing sealing performance between a lead terminal covering film and an outer packaging film to secure proper sealing to thereby improve durability.

The other purposes and advantages of the present invention will be apparent from the preferred embodiments described below.

### MEANS TO SOLVE THE PROBLEMS

The above problems are solved by the following means.

[1] An electrochemical device comprising:
a laminated-type outer packaging film having at least an
   innermost layer made of heat adhesive synthetic resin;
   an electrochemical element covered with the outer packaging film;
   a lead terminal having an inner end portion electrically connected to the electrochemical element and an outer end portion protruded to an outside from the outer packaging film; and
   a laminated-type lead terminal covering film having an outermost layer made of heat adhesive synthetic resin compatible with the innermost layer of the outer packaging film, the lead terminal covering film being arranged corresponding to a sealing portion of the outer packaging film,
   wherein the sealing portion of the outer packaging film is welded by heat sealing with the lead terminal sandwiched by and between the covering film, and
   wherein a melting point of the outermost layer of the lead terminal covering film is set to be lower than a melting point of the innermost layer of the outer packaging film.

[2] The electrochemical device as recited in Item 1, wherein a difference between a melting point of the innermost layer of the outer packaging film and a melting point of the innermost layer of the lead terminal covering film is 9 °C or more.

[3] The electrochemical device as recited in Item 1 or 2, wherein the melting point of the innermost layer of the outer packaging film is 124 °C or more.

[4] The electrochemical device as recited in any one of Items 1 to 3, wherein a thickness of the lead terminal covering film is 0.08 to 0.25 mm.

[5] The electrochemical device as recited in any one of Items 1 to 4, wherein the melting point of the outermost layer of the lead terminal covering film is 168 °C or below.

[6] The electrochemical device as recited in any one of Items 1 to 5, wherein the innermost layer of the outer packaging film and the outermost layer of the lead terminal covering film are made of the same series synthetic resin.

[7] The electrochemical device as recited in Item 6, wherein the innermost layer of the outer packaging film and the outermost layer of the lead terminal covering film are made of olefin series synthetic resin.

[8] The electrochemical device as recited in any one of Items 1 to 7, wherein a thickness of the lead terminal is 0.2 to 0.5 mm.

[9] The electrochemical device as recited in any one of Items 1 to 8, wherein the electrochemical element is provided with battery generating elements including at least a positive electrode, a negative electrode, and electrolyte interposed between the positive electrode and the negative electrode.

[10] A method of manufacturing an electrochemical device, the method comprising:
a step of preparing a laminated-type outer packaging film having at least an innermost layer made of heat adhesive synthetic resin, an electrochemical element, a lead terminal, and a laminated-type lead terminal covering film having an outermost layer made of heat adhesive synthetic resin compatible with an innermost layer of the outer packaging film, a melting point of the outermost layer being set to below a melting point of the innermost layer of the outer packaging film;
a step of covering a part of the lead terminal with the covering film;
a step of accommodating the electrochemical element with the outer packaging film;
a step of electrically connecting an inner end portion of the lead terminal to the electrochemical element with the outer end portion of the lead terminal protruded from the outer packaging film; and
a step of welding a sealing portion of the outer packaging film to the covering film partially covering the lead terminal by heat sealing.

[11] The method of manufacturing an electrochemical device as recited in Item 10, wherein the heat sealing of the sealing portion of the outer packaging film is performed at a temperature higher than the melting point of the innermost layer of the outer packaging film by 20 °C or more.

[12] The method of manufacturing an electrochemical device as recited in Item 10 or 11, wherein a time for the heat sealing of the sealing portion of the outer packaging film is set to 3 to 8 seconds.

### EFFECT OF THE INVENTION

According to the invention of Item [1], the melting point of the outermost layer of the lead terminal covering film is below the melting point of the innermost layer of the outer packaging film. Therefore, when the sealing portion of the outer packaging film is heat sealed, even if the temperature difference occurs between the innermost layer of the outer packaging film and the outermost layer of the lead terminal covering film so that the outer packaging film side becomes higher in temperature, the melting of the innermost layer of the outer packaging film and that of the outermost layer of the lead terminal covering film occur almost in parallel. For this reason, at the sealing portion, the outermost layer of the lead terminal covering film and the innermost layer of the outer packaging film evenly melt and harden, which effectively improves the sealing performance at the sealing portion.

According to the invention of Item [2], the difference between the melting point of the outermost layer of the lead terminal covering film and the melting point of the innermost layer of the outer packaging film is 9 °C or more. Therefore, the outermost layer of the lead terminal covering film and the innermost layer of the outer packaging film melt even more evenly at the time of heat sealing, which further improves the sealing performance.

According to the invention of Item [3], the melting point of the innermost layer of the outer packaging film is 124 °C or above. Therefore, the heat resistance as an electrochemical element can be secured.

According to the invention of Item [4], since the thickness of the lead terminal covering film is set to a predetermined thickness, the covering film can be adhered to the lead terminal without gaps, which further improves the sealing performance.

According to the invention in Item [5], since the melting point of the outermost layer of the lead terminal covering film is 168 °C or below, the workability at the time of heat sealing can be improved.

According to the invention of Item [6], since the innermost layer of the outer packaging film and the outermost layer of the lead terminal covering film are made of the same series synthetic resin, their compatibility during the heat sealing can be effectively exerted.

According to the invention of Item [7], since the innermost layer of the outer packaging film and the outermost layer of the lead terminal covering film are made of the same olefin series synthetic resin, their compatibility during the heat sealing can be effectively exerted, and the chemical resistance with respect to, e.g., electrolyte can be further improved.

According to the invention of Item [8], since the thickness of the lead terminal is set to 0.2 to 0.5 mm, the heat radiation restraint of the lead terminal at the time of heat sealing is conducted effectively in an electrochemical device that allows passing of high currents, and the processing time can also be shortened.

According to the invention of Item [9], since the electrochemical element also includes a generating element of a battery, a thin-shaped battery having a high sealing performance at the lead terminal pull-out part can be easily provided.

According to the invention of Item [10], an electrochemical device of the present invention can be assuredly produced.

According to the invention of Item [11], at the sealing portion of the outer packaging film, heat sealing is conducted at a temperature higher than the melting point of the innermost layer of the outer packaging film by 20 °C or more. Therefore, appropriate sealing performance can be attained without being influenced by heat radiation by the lead terminal.

According to the invention of Item [12], since the time for the heat sealing with respect to the sealing portion of the outer packaging film is 3 to 8 seconds, a high quality electrochemical device having an assuredly sealed sealing portion can be manufactured effectively.

### BRIEF DESCRIPTION OF THE DRAWINGS

[Fig. 1] Fig. 1 is a cross-sectional view showing an encapsulated state of a thin-shaped battery to which an electrochemical device according to an embodiment of the present invention is applied.
[Fig. 2] Fig. 2 is an exploded perspective view showing the thin-shaped battery in a state before encapsulation.
[Fig. 3] Fig. 3 is an exploded cross-sectional view of the thin-shaped battery in an encapsulated state.
[Fig. 4] Fig. 4 is an enlarged cross-sectional view of the portion "A" in Fig. 3.
[Fig. 5] Fig. 5 is a perspective view showing the sealing portion of the lead terminal of the thin-shaped battery and vicinity thereof.
[Fig. 6] Fig. 6 is a cross-sectional view showing the sealing portion of the lead terminal and vicinity thereof in a sealed state.
[Fig. 7] Fig. 7 is a perspective view showing a state in which an electrochemical element is accommodated in a bag-like processed outer packaging film.
[Fig. 8] Fig. 8 is a table showing results of sealing performance evaluations of Examples and Comparative Examples.

### BEST MODE FOR CARRYING OUT THE INVENTION

Embodiments of the present invention will be explained with reference to the drawings.

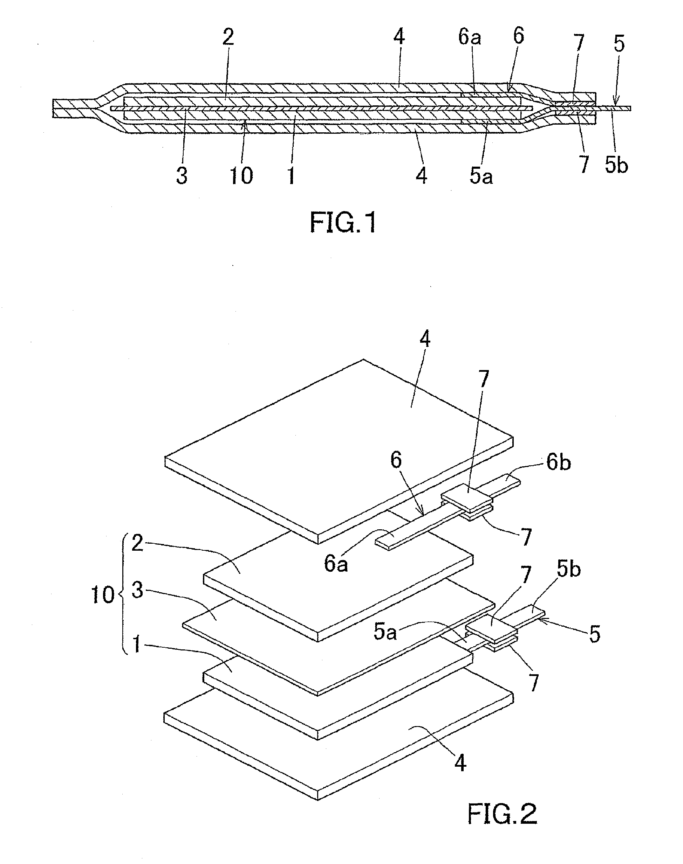

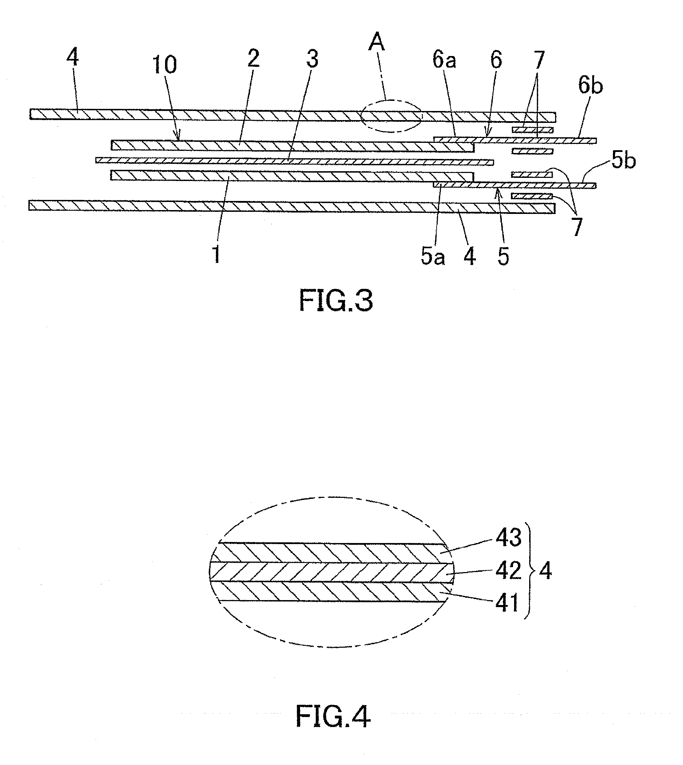

Fig. 1 is a cross-sectional view showing an encapsulated state of a thin-shaped battery to which an electrochemical device is applied, Fig. 2 is an exploded perspective view of the thin-shaped battery in a state before encapsulation, and Fig. 3 is an exploded perspective view of the thin-shaped battery in an encapsulated state.

In Figs. 1 to 3, this thin-shaped battery includes two sheets of outer packaging films 4 and 4 with circumferential edge portions thermally welded and the internal portions sealed, an electrochemical element 10 accommodated inside the outer packaging films 4 and 4, a pair of lead terminals 5 and 6 in which the inner end portions 5a and 6a as one end portions are connected to the electrochemical element 10 and the outer end portions 5b and 6b as the other end portions are exposed to the outside of the outer packaging films 4 and 4, and covering films 7 and 7 covering the positions of the lead terminal 5 and 6 corresponding to the pullout portions (sealing portion 4d) of the outer packaging films 4 and 4.

The electrochemical element 10 is constituted by laminating a positive electrode 1 and a negative electrode 2 via an electrolyte portion 3. The electrolyte portion 3 can be constituted by, for example, a combination of a separator and electrolyte, a combination of a separator and gel electrolyte, only gel electrolyte, or only solid electrolyte. Needless to say, the electrolyte portion 3 is not limited to one of the exemplified structures.

The positive electrode 1 and the negative electrode 2 are constituted by coating a surface of a metallic foil, such as, e.g., an aluminum foil or a copper foil, with a positive electrode material, such as, e.g., LiCoO₂ or LiCoMn₂O₄, and a negative electrode material, such as, e.g., LiC₆Ti₅O₁₂, respectively, together with a carbon conductive enhancing material and a binder.

The inner end portions 5a and 5b of the pair of lead terminals 5 and 6 are each fixed to the positive electrode 1 or the negative electrode 2 of the electrochemical element 10 by, e.g., welding, and electrically connected thereto.

The outer packaging film 4 has a laminate structure, for example, a three-layered structure having an innermost layer 41, an intermediate layer 42, and an outermost layer 43 as shown in Fig. 4. The innermost layer 41 is constituted by a thermal adhesion (thermoplastic) synthetic resin selected from the group including, for example, high density polyethylene, low density polyethylene, linear low density polyethylene, polyethylene series ionomer, and polyolefin resin such as polypropylene. The outermost layer 43 is constituted by polyethylene terephthalate (PET) or nylon.

The intermediate layer 42 of the outer packaging film 4 is made of a metallic foil selected from, for example, an aluminum foil or a SUS foil. The intermediate layer 42 effectively prevents intrusion of moisture from the outside and/or evaporation of electrolyte from the inside. On the other hand, the outermost layer 43 gives mechanic strength to protect the intermediate layer 42.

In the outer packaging film 4 of this embodiment, as the innermost layer 41, a packaging laminated material formed by forming a dry-laminated unstretched polypropylene film having a melting point of, e.g., 168 °C into a bag shape is used.

The positive electrode side and negative electrode side lead terminals 5 and 6 are each made of a metallic foil of, e.g., aluminum, copper, nickel, or stainless, and have a thickness of 0.2 to 0.5 mm.

In other words, the lead terminals 5 and 6 are required to lower the electric resistance to allow the passing of high currents, and therefore the thickness is preferably set to 0.2 mm or more, but preferably 0.5 mm or less at a maximum. This is because when the thickness exceeds 0.5 mm, it becomes difficult to fill both width end edges of the lead terminals 5 and 6 with synthetic resin such as a covering film 7, which may cause deteriorated sealing performance.

Corresponding to the portion 4d of the outer packaging film 4 which will be heat sealed, both the lead terminals 5 and 6 are each preliminarily covered with covering films 7 and 7 each having a thickness of 0.08 to 0.25 mm. This covering film 7 has a three-layer structure having an innermost layer 71, an intermediate layer 72, and an outermost layer 73. This covering film 7 prevents the lead terminals 5 and 6 from coming into contact with the intermediate layer 42 of the outer packaging film 4 to cause electric short.

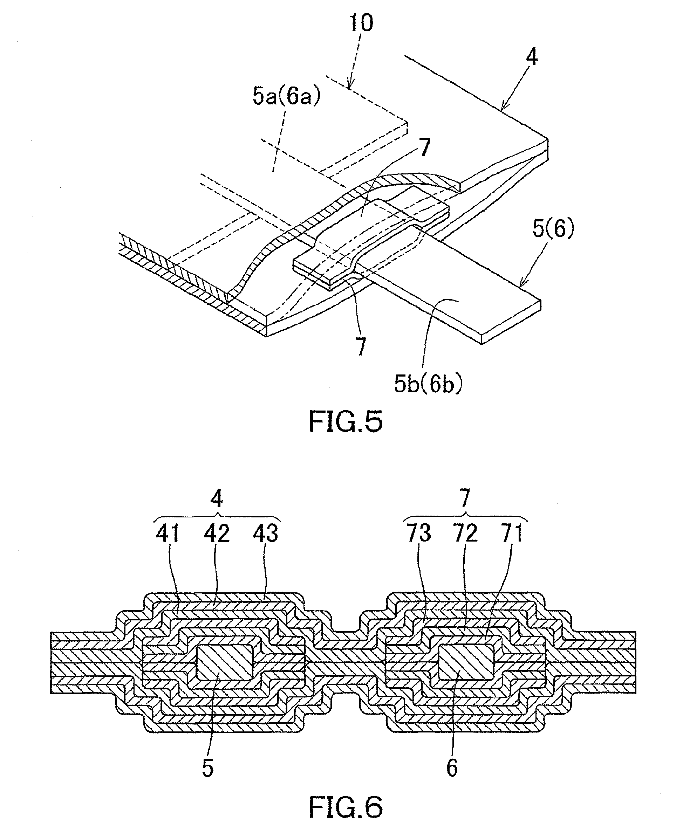

The innermost layer 71 of the covering film 7 is made of adhesive synthetic resin having good adhesion performance as shown in Fig. 6 with respect to metal which is a constituent material of the lead terminal. The intermediate layer 72 covering the innermost layer 71 is made of insulating resin. The outermost layer 73 in contact with the innermost layer 41 of the outer packaging film 4 is made of synthetic resin, such as, e.g., olefin resin, which is compatible with and same in series as the resin of the outermost layer 41 of the outer packaging film 4.

The melting point of the outermost layer 73 of the covering film 7 is set to below the melting point of the outermost layer 41 of the outer packaging film 4. In this embodiment, in cases where the melting point of the outermost layer 41 of the outer packaging film 4 is 168 °C, the melting point of the outermost layer 73 of the covering film 7 is set to, e.g., 134 °C so that the difference between the melting points thereof becomes 9 °C or more.

After covering the electrochemical element 10 with the outer packaging films 4 and 4, the sealing portions 4d of the outer packaging films 4 and 4 are sealed by heat sealing. In this case, the heat sealing is conducted at a temperature (188 °C) higher than the melting point of the innermost layer 41 of the outer packaging films 4 and 4 (168 °C in this embodiment) by 20 °C or more.

The heat sealing is performed by applying heat from the outside of the outer packaging film 4, and therefore the heat is less conducted to the outermost layer 73 of the covering film 7 compared to the innermost layer 41 of the outer packaging film 4. In addition, the lead terminals 5 and 6 made of a metallic material cause heat radiation, which causes a decreased temperature at the side of the outermost layer 73 of the covering film 7. This in turn results in a temperature difference between the innermost layer 41 of the outer packaging film 4 and the outermost layer 73 of the covering film 7 so that the temperature at the side of the innermost layer 41 of the outer packaging film 4 is higher. This phenomenon becomes more outstanding as the thickness of the lead terminals 5 and 6 increases.

For this reason, in this embodiment, the melting point of the outermost layer 73 of the covering film 7 of the lead terminal 5 and 6 is set to be below the melting point of the innermost layer 41 of the outer packaging film 4. Therefore, at the time of performing heat sealing of the portions of the outer packaging film 4 corresponding to the lead terminals 5 and 6, even if a temperature difference occurs between the innermost layer 41 of the outer packaging film 4 and the outermost layer 73 of the lead terminal covering film 7 so that the temperature on the side of the outer packaging film 4 is higher, the melting of the innermost layer 41 of the outer packaging film 4 and the melting of the outermost layer 73 of the lead terminal covering film 7 begin almost simultaneously, and therefore the melting of both the layers 41 and 73 progresses in parallel.

Therefore, in the sealing portion 4d, the outermost layer 73 of the covering film 7 melts evenly with respect to the innermost layer 41 of the outer packaging film 4, resulting in preferable melting of both the layers 41 and 73 to be securely joined, which effectively enhances the sealing performance of the sealing portion 4a of the outer packaging film 4.

The constituent material of the outermost layer 73 of the covering film 7 and the constituent material of the innermost layer 41 of the outer packaging film 4 can be arbitrarily selected from any heat adhesive (thermoplastic) synthetic resins. Like in this embodiment, as the constituent materials of both the layers 73 and 74, when the same series of resins, such as olefin series resin, such as, e.g., polyethylene (PE) and polypropylene (PP), are employed, the compatibility of both the layers 73 and 41 can be exerted effectively. The olefin series resins are especially excellent in chemical resistance, and can be affirmatively used considering the contact with electrolyte.

The difference between the melting point of the outermost layer 73 of the covering film 7 and the melting point of the innermost layer 41 of the outer packaging film 4 can be set arbitrarily. Like in this embodiment, setting the melting point difference to be 9 °C or more causes effective melting of the innermost layer 41 of the outer packaging film 4 and the outermost layer 73 of the covering film 7, which further enhances the sealing performance.

If the melting point of the outermost layer 73 of the covering film 7 covering the lead terminals 5 and 6 is below 124 °C, there is a concern that the heat resistance of the battery is affected. However, like this embodiment, when the melting point of the outermost layer 73 of the covering film 7 is set to 124 °C or above, the risk of deterioration of the heat resistance can be solved.

When the melting point of the innermost layer 41 of the outer packaging film 4 exceeds 168 °C, the heat sealing requires larger amount of energy and longer time, resulting in deteriorated productivity. Therefore, it is preferable that the melting point of the innermost layer 41 is 168 °C or below.

The amount of time for the heat sealing is preferably set to 3 to 8 seconds, more preferably 4 to 6 seconds. Insufficient heat sealing time may cause insufficient sealing due to the lack of heating. On the other hand, excessively long heat sealing may cause deteriorated productivity and difficulty in obtaining excellent sealing due to deterioration by heat caused by the excessive heating.

### EXAMPLES

Next, Examples and Comparative Examples of a thin-type battery having the aforementioned structure will be explained.

In Examples and Comparative Examples, the material and the thickness of the outermost layer 43 and the intermediate layer 42 of the outer packaging film 4 made of a packaging laminated material, and the thickness and the width of the lead terminals 5 and 6 were the same as follows:

### [OUTERMOST LAYER 43 AND INTERMEDIATE LAYER 42 OF OUTER PACKAGING FILM 4]

An outermost layer 43 made of nylon 25 µm and an intermediate layer 42 made of an aluminum foil (AA standard 8079, O material) were dry-laminated.

### [LEAD TERMINAL]

Thickness: 0.2 mm
Width: 50 mm

### [HEAT SEALING CONDITION]

Temperature: the melting point of the innermost layer 41 of the outer packaging film 4 + 30 °C
Pressure: 0.2 MPa

### [EXAMPLE 1]

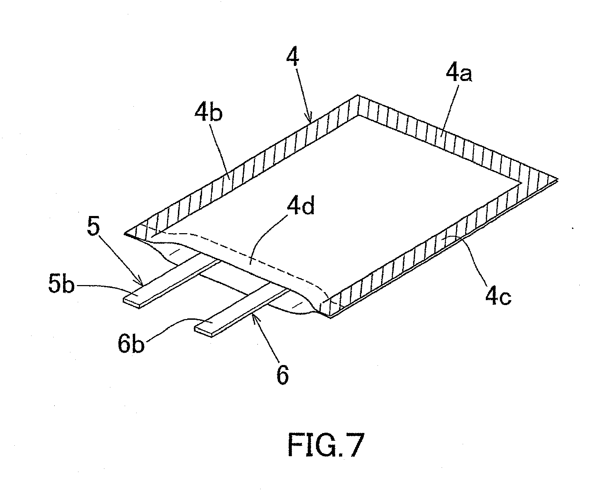

As a constituent material of the innermost layer 41 of the outer packaging film 4, a polypropylene unstretched film 30 µm having a melting point of 168 °C was selected and dry-laminated on a nylon film as an outermost layer 43 and an aluminum foil as an intermediate layer 42 to form a packaging laminated film. Then, this packaging laminated film was formed into a square shape and processed into a bag-like shape as shown in Fig. 7 to obtain an outer packaging film 4.

After filling 10 g of pseudo-electrolyte having a composition (EC: DEC = 1 : 1 + 1 mol LiPF6) as a content into the outer packaging film 4, the portions of the lead terminals 5 and 6 corresponding to the sealing portion were covered with covering films 7 each including an outermost layer 73 made of polypropylene and having a melting point of 134 °C. Then, heat sealing for 5 seconds was conducted to seal the sealing portions 4d of the outer packaging films 4.

### [EXAMPLE 2]

As a constituent material of the innermost layer 41 of the outer packaging film 4, a polypropylene unstretched film 30 µm having a melting point of 168 °C was selected and dry-laminated on a nylon film as an outermost layer 43 and an aluminum foil as an intermediate layer 42 to form a packaging laminated film. Then, this packaging laminated film was formed into a square shape and processed into a bag-like shape to obtain an outer packaging film 4.

After filling 10 g of pseudo-electrolyte having a composition (EC: DEC = 1 : 1 + 1 mol LiPF6) as a content into the outer packaging film 4, the portions of the lead terminals 5 and 6 corresponding to the sealing portion were covered with covering films 7 each including an outermost layer 73 made of polypropylene and having a melting point of 143 °C. Then, heat sealing for 5 seconds was conducted to seal the sealing portions 4d of the outer packaging films 4.

### [EXAMPLE 3]

As a constituent material of the innermost layer 41 of the outer packaging film 4, a polypropylene unstretched film 30 µm having a melting point of 143 °C was selected and dry-laminated on a nylon film as an outermost layer 43 and an aluminum foil as an intermediate layer 42 to form a packaging laminated film. Then, this packaging laminated film was formed into a square shape and processed into a bag-like shape to obtain an outer packaging film 4.

After filling 10 g of pseudo-electrolyte having a composition (EC: DEC = 1 : 1 + 1 mol LiPF6) as a content into the outer packaging film 4, the portions of the lead terminals 5 and 6 corresponding to the sealing portion were covered with covering films 7 each including an outermost layer 73 made of polypropylene and having a melting point of 134 °C. Then, heat sealing for 5 seconds was conducted to seal the sealing portions 4d of the outer packaging films 4.

### [EXAMPLE 4]

As a constituent material of the innermost layer 41 of the outer packaging film 4, a polypropylene unstretched film 30 µm having a melting point of 134 °C was selected and dry-laminated on a nylon film as an outermost layer 43 and an aluminum foil as an intermediate layer 42 to form a packaging laminated film. Then, this packaging laminated film was formed into a square shape and processed into a bag-like shape to obtain an outer packaging film 4.

After filling 10 g of pseudo-electrolyte having a composition (EC: DEC = 1 : 1 + 1 mol LiPF6) as a content into the outer packaging film 4, the portions of the lead terminals 5 and 6 corresponding to the sealing portion were covered with covering films 7 each including an outermost layer 73 made of polypropylene and having a melting point of 124 °C. Then, heat sealing for 5 seconds was conducted to seal the sealing portions 4d of the outer packaging films 4.

### [EXAMPLE 5]

As a constituent material of the innermost layer 41 of the outer packaging film 4, a polypropylene unstretched film 30 µm having a melting point of 134 °C was selected and dry-laminated on a nylon film as an outermost layer 43 and an aluminum foil as an intermediate layer 42 to form a packaging laminated film. Then, this packaging laminated film was formed into a square shape and processed into a bag-like shape to obtain an outer packaging film 4.

After filling 10 g of pseudo-electrolyte having a composition (EC: DEC = 1 : 1 + 1 mol LiPF6) as a content into the outer packaging film 4, the portions of the lead terminals 5 and 6 corresponding to the sealing portion were covered with covering films 7 each including an outermost layer 73 made of polypropylene and having a melting point of 126 °C. Then, heat sealing for 5 seconds was conducted to seal the sealing portions 4d of the outer packaging films 4.

### [COMPARATIVE EXAMPLE 1]

As a constituent material of the innermost layer 41 of the outer packaging film 4, a polypropylene unstretched film 30 µm having a melting point of 168 °C was selected and dry-laminated on a nylon film as an outermost layer 43 and an aluminum foil as an intermediate layer 42 to form a packaging laminated film. Then, this packaging laminated film was formed into a square shape and processed into a bag-like shape to obtain an outer packaging film 4.

After filling 10 g of pseudo-electrolyte having a composition (EC: DEC = 1 : 1 + 1 mol LiPF6) as a content into the outer packaging film 4, the portions of the lead terminals 5 and 6 corresponding to the sealing portion were covered with covering films 7 each including an outermost layer 73 made of polypropylene and having a melting point of 168 °C. Then, heat sealing for 5 seconds was conducted to seal the sealing portions 4d of the outer packaging films 4.

### [COMPARATIVE EXAMPLE 2]

As a constituent material of the innermost layer 41 of the outer packaging film 4, a polypropylene unstretched film 30 µm having a melting point of 143 °C was selected and dry-laminated on a nylon film as an outermost layer 43 and an aluminum foil as an intermediate layer 42 to form a packaging laminated film. Then, this packaging laminated film was formed into a square shape and processed into a bag-like shape to obtain an outer packaging film 4.

After filling 10 g of pseudo-electrolyte having a composition (EC: DEC = 1 : 1 + 1 mol LiPF6) as a content into the outer packaging film 4, the portions of the lead terminals 5 and 6 corresponding to the sealing portion were covered with covering films 7 each including an outermost layer 73 made of polypropylene having a melting point of 143 °C. Then, heat sealing for 5 seconds was conducted to seal the sealing portions 4d of the outer packaging films 4.

### [COMPARATIVE EXAMPLE 3]

As a constituent material of the innermost layer 41 of the outer packaging film 4, a polypropylene unstretched film 30 µm having a melting point of 134 °C was selected and dry-laminated on a nylon film as an outermost layer 43 and an aluminum foil as an intermediate layer 42 to form a packaging laminated film. Then, this packaging laminated film was formed into a square shape and processed into a bag-like shape to obtain an outer packaging film 4.

After filling 10 g of pseudo-electrolyte having a composition (EC: DEC = 1 : 1 + 1 mol LiPF6) as a content into the outer packaging film 4, the portions of the lead terminals 5 and 6 corresponding to the sealing portion were covered with covering films 7 each including an outermost layer 73 made of polypropylene having a melting point of 134 °C. Then, heat sealing for 5 seconds was conducted to seal the sealing portions 4d of the outer packaging films 4.

### [COMPARATIVE EXAMPLE 4]

The conditions were the same as Comparative Example 2, but heat sealing was conducted for 20 seconds.

### [Evaluation of Sealing Performance

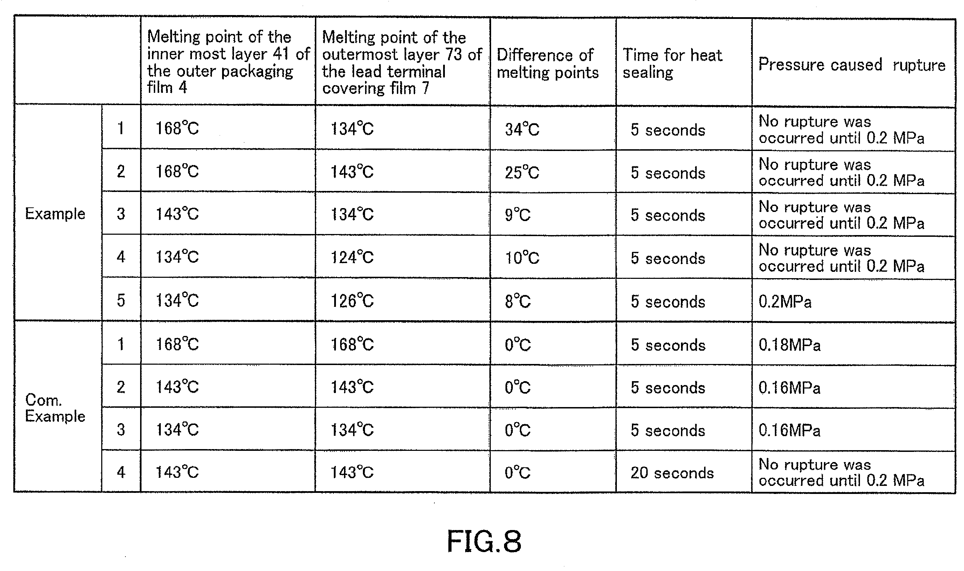

A preservation test was conducted for each test piece for one week at 85°C in a stationary manner with the tab portion facing downward. Then, the air was supplied into the inside of each test piece with an injection needle while measuring the pressure, and the pressure which caused rupture of the test piece was measured. The results are shown in Fig. 8.

As is apparent from the table in Fig. 8, in Examples 1 to 5, the test pieces did not cause rupture even at 02 MPa, which was the maximum pressure of the air pressure applying device. On the other hand, in Comparative Examples 1 to 3, it was confirmed that the test pieces were ruptured and therefore were inferior in sealing performance. Furthermore, in Comparative Examples 1 to 3, our investigation reveled that the starting point of the rupture was the boundary between the innermost layer 41 of the outer packaging film 4 and the outermost layer 73 of the covering film 7 of the lead terminals 5 and 6.

In the aforementioned embodiments of the present invention, our explanation was directed to embodiments in which an electrochemical device was applied to a thin-type battery, but the electrochemical device is not limited to a thin-type battery, and can be applied to various types of electrochemical devices, such as, e.g., an electrical double layer capacitor.

The present invention claims priority to Japanese Patent Application No. 2009-4913 filed on January 13, 2009, the entire disclosure of which is incorporated herein by reference in its entirety.

It should be understood that the terms and expressions used herein are used for explanation and have no intention to be used to construe in a limited manner, do not eliminate any equivalents of features shown and mentioned herein, and allow various modifications falling within the claimed scope of the present invention.

While the present invention may be embodied in many different forms, a number of illustrative embodiments are described herein with the understanding that the present disclosure is to be considered as providing examples of the principles of the invention and such examples are not intended to limit the invention to preferred embodiments described herein and/or illustrated herein.

While illustrative embodiments of the invention have been described herein, the present invention is not limited to the various preferred embodiments described herein, but includes any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to examples described in the present specification or during the prosecution of the application, which examples are to be construed as non-exclusive.

### INDUSTRIAL APPLICABILITY

The electrochemical device of the present invention can be used as a power source for, e.g., electric cars and mobile phones.

### DESCRIPTION OF THE REFERENCE NUMERALS

1... positive electrode
2... negative electrode
3... electrolyte
4... outer packaging film
4d... sealing portion of outer packaging film
5... positive electrode side lead terminal
5a... inner end portion of the positive electrode side lead terminal
5b... outer end portion of the positive electrode side lead terminal
6... negative electrode side lead terminal
6a... inner end portion of the negative electrode side lead terminal
6b... outer end portion of the negative electrode side lead terminal
7... covering film for lead terminal
10... electrochemical element
41... innermost layer of the outer packaging film
73... outermost layer of the covering film for lead terminal

## Claims

1. An electrochemical device comprising:
a laminated-type outer packaging film having at least an innermost layer made of heat adhesive synthetic resin;
an electrochemical element covered with the outer packaging film;
a lead terminal having an inner end portion electrically connected to the electrochemical element and an outer end portion protruded to an outside from the outer packaging film; and
a laminated-type lead terminal covering film having an outermost layer made of heat adhesive synthetic resin compatible with the innermost layer of the outer packaging film, the lead terminal covering film being arranged corresponding to a sealing portion of the outer packaging film,
wherein the sealing portion of the outer packaging film is welded by heat sealing with the lead terminal sandwiched by and between the covering film, and
wherein a melting point of the outermost layer of the lead terminal covering film is set to be lower than a melting point of the innermost layer of the outer packaging film.

2. The electrochemical device as recited in claim 1, wherein a difference between a melting point of the innermost layer of the outer packaging film and a melting point of the innermost layer of the lead terminal covering film is 9 °C or more.

3. The electrochemical device as recited in claim 1 or 2, wherein the melting point of the innermost layer of the outer packaging film is 124 °C or more.

4. The electrochemical device as recited in any one of claims 1 to 3, wherein a thickness of the lead terminal covering film is 0.08 to 0.25 mm.

5. The electrochemical device as recited in any one of claims 1 to 4, wherein the melting point of the outermost layer of the lead terminal covering film is 168 °C or below.

6. The electrochemical device as recited in any one of claims 1 to 5, wherein the innermost layer of the outer packaging film and the outermost layer of the lead terminal covering film are made of the same series synthetic resin.

7. The electrochemical device as recited in claim 6, wherein the innermost layer of the outer packaging film and the outermost layer of the lead terminal covering film are made of olefin series synthetic resin.

8. The electrochemical device as recited in any one of claims 1 to 7, wherein a thickness of the lead terminal is 0.2 to 0.5 mm.

9. The electrochemical device as recited in any one of claims 1 to 8, wherein the electrochemical element is provided with battery generating elements including at least a positive electrode, a negative electrode, and electrolyte interposed between the positive electrode and the negative electrode.

10. A method of manufacturing an electrochemical device, the method comprising:
a step of preparing a laminated-type outer packaging film having at least an innermost layer made of heat adhesive synthetic resin, an electrochemical element, a lead terminal, and a laminated-type lead terminal covering film having an outermost layer made of heat adhesive synthetic resin compatible with an innermost layer of the outer packaging film, a melting point of the outermost layer being set to below a melting point of the innermost layer of the outer packaging film;
a step of covering a part of the lead terminal with the covering film;
a step of accommodating the electrochemical element with the outer packaging film;
a step of electrically connecting an inner end portion of the lead terminal to the electrochemical element with the outer end portion of the lead terminal protruded from the outer packaging film; and
a step of welding a sealing portion of the outer packaging film to the covering film partially covering the lead terminal by heat sealing.

11. The method of manufacturing an electrochemical device as recited in claim 10, wherein the heat sealing of the sealing portion of the outer packaging film is performed at a temperature higher than the melting point of the innermost layer of the outer packaging film by 20 °C or more.

12. The method of manufacturing an electrochemical device as recited in claim 10 or 11, wherein a time for the heat sealing of the sealing portion of the outer packaging film is set to 3 to 8 seconds.
